# EUROPEAN PATENT APPLICATION

(11) **EP 2 450 420 A1**
(43) Date of publication of application: **09.05.2012**
(21) Application number: 10190367.2
(22) Date of filing: 08.11.2010
(51) Int. Cl.: C10G 2/00, B01J 35/02, C01B 3/02, C07C 1/04

(54) **Multi stage process for producing hydrocarbons from syngas**

(71) Applicant: Shell Internationale Research Maatschappij B.V., 2596 HR The Hague (NL)
(72) Inventor: Bracht , Maarten, 1031 HW Amsterdam (NL); Bungku, Desmond Andrew, 1031 HW Amsterdam (NL); Zhao, Ying, 1031 HW Amsterdam (NL)

(57) **Abstract**

The present invention provides a multi-stage process for the production of hydrocarbons from syngas comprising hydrogen and carbon monoxide, which comprises the steps of:
a) providing a syngas feed to a first stage Fischer-Tropsch reactor which is provided with a hydrocarbon synthesis catalyst and allowing CO and hydrogen to convert into hydrocarbon products at an elevated temperature and pressure;
b) feeding at least part of the effluent from the first stage Fischer-Tropsch reactor to a first separation unit;
c) removing a gaseous effluent stream comprising hydrogen and CO and gaseous hydrocarbons from the first separation unit;
d) removing one or more other streams comprising hydrocarbon and/or water from the first separation unit;
e) subjecting at least part of the removed gaseous stream as obtained in step (c) to a syngas manufacturing process to prepare a syngas stream which comprises CO and hydrogen, which process is carried out at an elevated temperature and pressure;
f) feeding at least part of the syngas stream as obtained in step e) to a second stage Fischer-Tropsch reactor provided with a hydrocarbon synthesis catalyst and allowing CO and hydrogen to convert into hydrocarbon products at an elevated temperature and pressure;
g) feeding at least part of the effluent from the second stage Fischer- Tropsch reactor to a second separation unit;
h) removing a gaseous effluent stream comprising hydrogen and CO from the second separation unit; and
i) removing one or more other streams comprising hydrocarbon and/or water from the separation unit from the second separation unit.

## Description

### Field of the invention

The present invention relates to a method for the optimisation of a multi-stage Fischer-Tropsch process, in particular a two-stage Fischer-Tropsch process, for producing hydrocarbons from synthesis gas.

### Background of the invention

Many documents are known describing methods and processes for the catalytic conversion of (gaseous) hydrocarbonaceous feedstocks, especially methane, natural gas and/or associated gas, into liquid products, especially methanol and liquid hydrocarbons, particularly paraffinic hydrocarbons.

The Fischer-Tropsch process can be used for the conversion of synthesis gas from hydrocarbonaceous feedstocks into liquid and/or solid hydrocarbons. Generally, the feedstock, e.g. natural gas, associated gas, coal-bed methane, heavy and/or residual oil fractions, peat, coal or biomass, is converted in a first step into a mixture of hydrogen and carbon monoxide. This mixture is often referred to as synthesis gas or syngas. The synthesis gas is then fed into one or more hydrocarbon synthesis reactors, where it is converted in one or more steps over a suitable catalyst at elevated temperature and pressure into paraffinic compounds ranging from methane to high molecular weight compounds comprising up to 200 carbon atoms, or, under particular circumstances, even more.

Numerous types of reactor systems have been developed for carrying out the Fischer-Tropsch reaction. For example, Fischer-Tropsch reactor systems include fixed bed reactors, especially multi-tubular fixed bed reactors, fluidised bed reactors, such as entrained fluidised bed reactors and fixed fluidised bed reactors, and slurry bed reactors such as three-phase slurry bubble columns and ebulated bed reactors.

Usually, a gaseous and a liquid product stream are recovered from a Fischer-Tropsch process. The gaseous product stream comprises unconverted synthesis gas and non syngas components that behave like inerts in the Fischer-Tropsch process. Reference herein to inerts is to compounds that are not reactive in the Fischer-Tropsch synthesis reaction and include carbon dioxide, methane, C₂-C₄ hydrocarbons, and also impurities in the synthesis gas stream, mainly nitrogen and argon. Upon cooling, the gaseous product stream typically results in condensed hydrocarbons, impure water and Fischer-Tropsch tail gas, also referred to as Fischer-Tropsch off-gas. The tail gas mainly comprises unconverted synthesis gas, light C₁-C₄ hydrocarbons, nitrogen and argon and residual amounts of C₅-C₉ hydrocarbons, especially C₅-C₆ hydrocarbons, and H₂O. Part of the Fischer-Tropsch tail gas is often recycled to the hydrocarbon synthesis reactor.

The Fischer-Tropsch hydrocarbon synthesis may be carried out in two or more stages; each stage producing the products detailed above. In a two-stage process, part or all of the tail gas of the first stage is fed to the second stage.

W02007/009952 describes a multi-stage Fischer-Tropsch synthesis process for the production of hydrocarbon products from syngas, each stage of the process comprising one or more syngas conversion reactors in which syngas is partially converted into hydrocarbon products at conversion conditions. Part of the syngas stream is obtained from a partial oxidation process. Another syngas stream is a recycle stream from the conversion reactor.

W02008/062208 describes a process for converting synthesis gas to hydrocarbons, using a Fischer-Tropsch synthesis wherein two Fisher-Tropsch reactors are used in series with water removal between them and additional hydrogen added to the second reactor.

The known two-stage Fischer-Tropsch synthesis processes still leave room for improvement in terms of total liquid production and thermal and carbon efficiency.

### Summary of the invention

It has now been found that that the total liquid production and thermal and carbon efficiency can be increased when in a two-stage Fischer-Tropsch synthesis use is made of an interstage syngas manufacturing process.

Accordingly, the present invention provides a multi-stage process for the production of hydrocarbons from syngas comprising hydrogen and carbon monoxide, which comprises the steps of:
a) providing a syngas feed to a first stage Fischer-Tropsch reactor which is provided with a hydrocarbon synthesis catalyst and allowing CO and hydrogen to convert into hydrocarbon products at an elevated temperature and pressure;
b) feeding at least part of the effluent from the first stage Fischer-Tropsch reactor to a first separation unit;
c) removing a gaseous effluent stream comprising hydrogen and CO and gaseous hydrocarbons from the first separation unit;
d) removing one or more liquid effluent streams comprising hydrocarbons and/or water from the first separation unit;
e) subjecting at least part of the removed gaseous stream as obtained in step (c) to a syngas manufacturing process to prepare a syngas stream which comprises CO and hydrogen, which process is carried out at an elevated temperature and pressure;
f) feeding at least part of the syngas stream as obtained in step e) to a second stage Fischer-Tropsch reactor provided with a hydrocarbon synthesis catalyst and allowing CO and hydrogen to convert into hydrocarbon products at an elevated temperature and pressure;
g) feeding at least part of the effluent from the second stage Fischer- Tropsch reactor to a second separation unit;
h) removing a gaseous effluent stream comprising hydrogen and CO from the second separation unit; and
i) removing one or more other liquid effluent streams comprising hydrocarbon and/or water from the separation unit from the second separation unit.

An advantage of the process according to the invention is that the production capacity of the Fischer-Tropsch reactors can be increased and that therefore the total liquid production of a plant design can be increased. A further advantage is that the thermal and carbon efficiency can be improved.

### Detailed description of the invention

The invention provides a method for the optimisation of a multi-stage Fischer-Tropsch process.

The syngas may be provided by any process for converting a hydrocarbonaceous feedstock into syngas known in the art, for example catalytic or non-catalytic partial oxidation, autothermal reforming, steam methane reforming or dry reforming. Provision of the synthesis gas by means of a partial oxidation process, an autothermal reforming process or a gas heated reforming process is preferred since these processes typically result in a synthesis gas with a hydrogen/CO molar ratio which is in a range that is desired. A partial oxidation process is particularly preferred.

In step (a) of the process according to the invention a syngas is provided to a first-stage Fischer-Tropsch reactor provided with a hydrocarbon synthesis catalyst and is catalytically converted at elevated temperature and pressure to obtain hydrocarbon products.

Preferably, the syngas provided in step (a) is a fresh syngas, comprising hydrogen and CO. The syngas may, for example, be obtained from natural gas, but also peat, coal, biomass, or other hydrocarbon fractions by processes like gasification, autothermal reforming, catalytic or non-catalytic partial oxidation.

At least part of the effluent from the first stage reactor is fed in step (b) to a first separation unit from which a gaseous effluent stream is removed in step (c), which gaseous effluent stream comprises CO, hydrogen and gaseous hydrocarbons.

In step (d) one or more liquid effluent streams comprising hydrocarbons and/or water are removed from the first separation unit.

In step (e) at least part of gaseous effluent stream as obtained in step (c) is subjected to the syngas manufacturing process to prepare a syngas stream which comprises CO and hydrogen. Preferably, the entire gaseous effluent stream as obtained in step (c) is subjected to the the syngas manufacturing process in step (e).

In step (f) at least part of syngas stream as obtained in step (e) is fed to the second stage Fischer-Tropsch reactor. Preferably, the entire syngas stream as obtained in step (e) is subjected to the second stage Fischer-Tropsch reactor in step (f).

Preferably, at least part of the gaseous effluent stream as obtained in step (c) is recycled to the first stage Fischer-Tropsch reactor. This aids the conversion of synthesis gas to C₅⁺ hydrocarbons.

Preferably, at least part of the gaseous effluent stream as obtained in step (g) is recycled to the second stage Fischer-Tropsch reactor. This aids the conversion of synthesis gas to C₅⁺ hydrocarbons.

Preferably, an additional hydrogen-containing gas stream is provided to the second stage Fischer-Tropsch reactor.

The additional hydrogen-containing gas stream may be hydrogen gas or hydrogen-rich synthesis gas or any other hydrogen-containing gas, and may be a synthesis gas obtained by steam methane reforming having a hydrogen/CO molar ratio between 3 and 8 preferably between 4 and 7. This aids the conversion of synthesis gas to C₅⁺ hydrocarbons.

Preferably, the gaseous effluent stream to be recycled to the first or second stage Fischer-Tropsch reactor comprises between 5-250 mol% of the syngas stream or gaseous effluent stream supplied to respective reactor, preferably between 50-200 mol%.

In one embodiment of the process of the present invention part of the gaseous stream as obtained in step (c) is not subjected to the syngas manufacturing process in step (e) but it is bypassed to the second stage Fischer-Tropsch reactor.

Preferably, in step (e) an additional methane-containing gas stream, preferably a natural gas stream, is subjected to the syngas manufacturing manufacturing, and at least part of the syngas stream so obtained is fed to the second stage Fischer-Tropsch reactor.

The hydrogen/CO molar ratio in the syngas provided in step (a), including an optional recycle stream, is preferably in the range of from 0.3 to 2.3, more preferably of from 0.5 to 2.1. The hydrogen/CO molar ratio in the syngas stream to be fed to the second stage Fischer-Tropsch reactor in step (f), including an optional recycle stream, is preferably in the range of from 1.0 to 2.3, more preferably of from 1.5 to 2.1.

The catalytic conversion in the first and the second stage Fischer-Tropsch reactors may be carried out at any temperature and pressure known to be suitable for Fischer Tropsch hydrocarbon synthesis, typically a temperature in the range of from 125 to 400 °C, preferably 175 to 300 °C, and a pressure in the range from 5 to 150 bar absolute, preferably 10 to bar absolute, and a gaseous hourly space velocity in the range from 500 to 10000 Nl/1/h, preferably 500 to 5000.

Preferably the temperature in the second stage Fischer-Tropsch reactor is greater than the temperature in the first stage Fischer-Tropsch. More preferably, the temperature in the second stage Fischer-Tropsch reactor is in the range of from 5 to 15 °C higher than in the first stage Fischer-Tropsch reactor.

Preferably, the temperature in the first stage Fischer-Tropsch reactor is in the range of from 190 to 270 °C, more preferably of from 210 to 250 °C, even more preferably around 230 °C. The temperature in the second stage Fischer-Tropsch reactor is preferably in the range of from 200 to 280 °C, more preferably of from 220 to 260 °C, even more preferably around 240 °C. The pressure in the second stage Fischer-Tropsch reactor may be more than, the same as, or less than the pressure in the first stage Fischer-Tropsch reactor.

The productivity is typically expressed as the space time yield (STY), which is the amount (in kg) of hydrocarbon product (C₁+) per hour per cubic metre of catalyst-containing reaction zone. The hydrocarbon products include all products made in the Fischer-Tropsch reaction containing one or more carbon atoms, e.g. all paraffins and olefins produced as well as any oxygenates (alcohols, aldehydes, acids etc.), but excluding carbon dioxide. For fixed bed reactors, the volume of the catalyst-containing reaction zone is the catalyst bed volume. For slurry or ebullating reactors, the catalyst particle volume is taken as the volume of the catalyst-containing reaction zone. In the case that different reactor types in one multi-stage plant are used the volume of the catalyst-containing reaction zone is the catalyst particle volume. Typically the producticity (usually expressed as space time yield) in the second stage reactor will be lower than in the first stage reactor.

The total carbon monoxide conversion in a two-stage Fischer Tropsch reactor system is suitably at least 80%, preferably at least 90%, more preferably at least 95%. The carbon monoxide conversion per stage is suitably at least 60%, preferably at least 70%, more preferably at least 75%. The ratio of the amount of carbon monoxide to the volume of catalyst is suitably lower in the second stage compared to the first stage.

The volume ratio of synthesis gas provided in step (a) to the first stage Fischer-Tropsch reactor and synthesis gas fed in step (f) to the second stage Fischer-Tropsch reactor is in the range of from 3.0 to 10.0. Suitably, the ratio of the amount of carbon monoxide to the volume of catalyst is lower in the second stage compared to the first stage.

In the process according to the invention, any hydrocarbon synthesis catalyst known in the art may be used in both the first and the second stage Fischer-Tropsch reactors. It is preferred to use the same reactor type in each stage of the two stages. The catalyst in the first stage Fischer-Tropsch reactor may differ from the catalyst in the second stage Fischer-Tropsch reactor.

In order to obtain a productivity in the second stage that is at least 80%, preferably at least 90%, of that in the first stage, the second stage Fischer-Tropsch reactor preferably contains a catalyst with a shorter diffusion path length than the catalyst of the first stage Fischer-Tropsch reactor. A shorter diffusion path length of the catalyst may for example be obtained by using a catalyst of a different morphology, in particular catalyst particles with a smaller diameter or of a different shape.

Preferably the Fischer-Tropsch catalyst comprises a Group VIII metal component, more preferably cobalt, iron and/or ruthenium, most preferably cobalt. References to the Periodic Table and groups thereof used herein refer to the previous IUPAC version of the Periodic Table of Elements such as that described in the 68th Edition of the Handbook of Chemistry and Physics (CPC Press). Typically, the catalysts comprise a catalyst carrier. The catalyst carrier is preferably porous, such as a porous inorganic refractory oxide, more preferably alumina, silica, titania, zirconia or combinations thereof, most preferably titania. The optimum amount of catalytically active metal present on the carrier depends inter alia on the specific catalytically active metal. Typically, the amount of cobalt present in the catalyst may range from 1 to 100 parts by weight of carrier material, preferably from 10 to 50 parts by weight per 100 parts by weight of carrier material. In case the catalyst comprises cobalt and titania, the amount of cobalt preferably is in the range of between 10 weight percent (wt%) and 35 wt% cobalt, more preferably between 15 wt% and 30 wt% cobalt, calculated on the total weight of titania and cobalt. A number of embodiments of the invention are described in detail and by way of example only with reference to the accompanying drawings.

In step (e) at least part of the removed gaseous stream as obtained in step (c) is subjected to a syngas manufacturing process. The syngas manufacturing process in step (e) is preferably a partial oxidation process, an autothermal reforming process, a steam reforming process, a gas heated reforming process or a chemical looping reforming process. More preferably, the syngas manufacturing process in step (e) is a gas heated reforming process or a chemical looping reforming process.

The syngas manufacturing process in step (e) can suitably be carried out at a the temperature is in the range from 500 to 1500 °C and a pressure in the range from 5 to 150 bar absolute.

The syngas manufacturing process in step (e) can suitably be a partial oxidation process wherein at least part of the removed gaseous stream as obtained in step (c) is contacted with oxygen and converted into syngas at a temperature in the range of from 800-1500 °C, preferably in the range of from 1000-1400 °C. The pressure at which the syngas product is obtained in the partial oxidation may be between 1 and 10 MPa and suitably between 2 and 8 MPa. The pressure is suitably at the same level as the operating pressure of the first stage Fischer-Tropsch reactor such to avoid expansion or recompression between the various process steps. However, recompression may be required if a good match between the operating pressure levels cannot be achieved. Optionally steam can be added to the partial oxidation process.

The partial oxidation process is performed such to achieve an almost 100% conversion of methane by a combination of partial oxidation and combustion using a slight excess of oxygen. A slight excess is relative to the stoichiometric amount of oxygen required to perform a partial oxidation of the hydrocarbons present in at least part of the removed gaseous effluent stream as obtained in step (c). Under the prevailing partial oxidation conditions a syngas product having a hydrogen/carbon monoxide molar ratio below the molar consumption ratio of the reactor, and especially in the range of 0.5-2.0.

The syngas manufacturing process in step (e) can suitably be preceded by a pre-reforming step known in the art.

The syngas manufacturing process in step (e) can suitably be an autothermal reforming process wherein at least part of the removed gaseous stream as obtained in step (c) is contacted with oxygen and steam, and converted into syngas at a temperature in the range of from 800-1300 °C, preferably in the range of from 900-1200 °C The pressure at which the syngas product is obtained in the autothermal reforming may be between 1 and 10 MPa and suitably between 2 and 8 MPa. The pressure is suitably at the same level as the operating pressure of the first stage Fischer-Tropsch reactor such to avoid expansion or recompression between the various process steps. However, recompression may be required if a good match between the operating pressure levels cannot be achieved.

The autothermal reforming process is performed such to achieve an almost 100% conversion of methane by a combination of partial oxidation, steam methane reforming and combustion using steam and a slight excess of oxygen. A slight excess is relative to the stoichiometric amount of oxygen required to perform the autothermal reforming of the hydrocarbons present in at least part of the removed gaseous effluent stream as obtained in step (c). The steam/carbon ratio is preferably in the range of from 0.3-3.0. Under the prevailing autothermal reforming conditions a syngas product having a hydrogen/carbon monoxide molar ratio below the molar consumption ratio of the reactor, and especially in the range of 0.5-2.0.

The syngas manufacturing process in step (e) can suitably be preceded by a pre-reforming step known in the art.

The syngas manufacturing process in step (e) can suitably be a steam reforming process wherein at least part of the removed gaseous stream as obtained in step (c) is contacted with steam, and converted into syngas at a temperature in the range of from 600-1000 °C, preferably in the range of from 700-900 °C The pressure at which the syngas product is obtained in the steam reforming may be between 1 and 8 MPa and suitably between 2 and 6 MPa. The pressure is suitably at the same level as the operating pressure of the first stage Fischer-Tropsch reactor such to avoid expansion or recompression between the various process steps. However, recompression may be required if a good match between the operating pressure levels cannot be achieved.

The steam reforming process is performed such to achieve a high conversion of the hydrocarbon content by using an excess of steam. An excess is relative to the stoichiometric amount of steam required to perform steam reforming of the hydrocarbons present in at least part of the removed gaseous effluent stream as obtained in step (c). This excess of steam results in a syngas product having a hydrogen/carbon monoxide [H₂/CO] molar ratio above the molar consumption ratio of the reactor, and can be brought below the molar consumption ratio of the reactor by mixing with unconverted gaseous stream as obtained in step c). After mixing the resulting syngas stream has a molar hydrogen/CO ratio in the range of 0.5-2.0.

In the autothermal reforming process and steam reforming process use is made of a catalyst to covert methane into syngas. Any of the known reforming catalysts to be used in these processes can be used in the process according to the present invention.

The syngas manufacturing process in step (e) can suitably be preceded by a pre-reforming step known in the art.

The syngas manufacturing process in step (e) is preferably a gas heat reforming process which prepares a syngas having a hydrogen/carbon monoxide molar ratio below the molar feed ratio of the first stage Fischer-Tropsch reactor.

Suitably the syngas as prepared in the gas heat reforming process has a hydrogen/CO molar ratio in the range of 0.5 to 2.0.

The gas heat reforming process comprises a heat exchange reformer unit (HER) and an auto-thermal reformer (ATR) unit. In one embodiment according to the invention hydrocarbons present in at least part of the removed gaseous effluent stream as obtained in step (c) and steam is fed to the HER unit and a second part is fed to the ATR unit. The effluent of the ATR unit, optionally in admixture with the effluent of the HER unit, is used to provide the necessary heat in the HER unit by means of indirect heat exchange. The parallel configured HER process may be performed as described in for example EP-A-1106570.

In another preferred embodiment of the invention hydrocarbons present in at least part of the removed gaseous effluent stream as obtained in step (c) and steam is for its majority or even more preferred, exclusively, fed to the HER unit. The effluent of the HER unit is used as feed in the ATR unit. The effluent of the ATR unit, in this configuration, is used to provide the necessary heat in the HER unit by means of indirect heat exchange. This so-called series process configuration is advantageous because a significant proportion of unconverted methane as is present in the effluent of the HER unit may then be converted in the ATR unit to carbon monoxide and hydrogen. The series configured HER process may be performed as described in for example US-B-6525104.

The HER unit is preferably a tube and shell reactor wherein a steam reforming reaction takes place in the tubes in the presence of a steam reforming catalyst at low steam:carbon ratio and wherein the required heat of the endothermic reaction is provided by passing the effluent of the ATR unit to the shell side of the reactor. The catalyst and process conditions as applied in the steam reformer reactor tubes may be those known by the skilled person in the field of steam reforming. Suitable catalysts comprise nickel optionally applied on a carrier, for example alumina. The space velocity of the gaseous feed is preferably from 700 to 1000 litre (S.T.P.)/litre catalyst/hour, wherein S.T.P. means Standard Temperature of 15 °C and pressure of 1 atm abs. The steam to carbon (as hydrocarbon and CO) molar ratio is preferably from 0 up to 2.5 and more preferably below 1 and most preferably from 0.5 up to 0.9.

The steam reforming catalyst is normally in the form of shaped units, e.g. cylinders, rings, saddles, and cylinders having a plurality of through holes, and are typically formed from a refractory support material e.g. alumina, calcium aluminate cement, magnesia or zirconia impregnated with a suitable catalytically active metal such as nickel. At low steam to carbon process ratios at east a portion of the catalyst preferably includes a precious metal such as ruthenium.

The product gas as it leaves the tubes of the HER unit preferably has a temperature of from 650 up to 900 °C and a hydrogen/CO molar ratio of from 4 up to 6. The operating pressure at the tube side is preferably between 2 and 5 MPa. The ATR unit is typically operated at a slightly lower pressure to avoid reompression of the syngas from the HER unit before feeding to the ATR unit. This means that in the HER unit the pressure at the shell side will suitably be the in this range as well. The ATR unit may be the well-known auto-thermal reformer units as commercially used. The oxygen used in the ATR unit preferably has a purity of above 90 vol.% and more preferably above 99 vol.% to reduce the inerts level even further. Such pure oxygen is preferably obtained in a cryogenic air separation process or by so-called ion transport membrane processes.

The syngas manufacturing process in step (e) can suitably be preceded by a pre-reforming step known in the art.

In another preferred embodiment the syngas manufacturing process in step (e) is a chemical looping reforming process. In a chemical looping reforming process hydrocarbons are converted into syngas using particles of a oxygen carrier that circulate between a reforming reactor and an air reactor. In the reforming reactor, the oxygen carrier particles are reduced by the gaseous stream as obtained in step (c), which in turn is partially oxidized to H₂, CO, CO₂ and H₂O. In the air reactor the reduced oxygen carrier particles are reoxidized with air. The oxygen carrier particles to be used suitable comprises a metal based carrier material for instance nickel.

The chemical looping reforming process can suitably be carried out at a temperature in the range of from 500-1200°C, preferably in the range of from 800-1100°C. A pressure can suitably applied in the range of from 1-100 bar absolute, preferably in the range of from 10-70 bar absolute. The ratio of air to gaseous stream as obtained in step (c) is suitably in the range of from 0.2 -0.8, preferably in the range of from 0.3-0.6

The present invention also provides a hydrocarbon product or products whenever formed by a process as herein described, including any products made by hydrocoversion of the hyrocarbon product, such as especially kerosene, gas oil and/or base oil. In particular, the present invention provides products generally formed by the Fischer-Tropsch process.

Products of the Fischer-Tropsch synthesis may range from methane to heavy paraffinic waxes. Preferably, the production of methane is minimised and a substantial portion of the hydrocarbons produced have a carbon chain of at least 5 carbon atoms. Preferably, the amount of C₅⁺ hydrocarbons is at least 60% by weight of the total product, more preferably, at least 70% by weight, even more preferably, at least 80% by weight, most preferably, at least 85% by weight.

### Example according this invention

The following example has been modelled using PRO/II software as obtained from Invensys Process Systems, Plano, Houston (USA).

A syngas composition comprising 0.5 vol.% CH₄, 0,2 vol.% H₂O, 1.9 vol.% CO₂, 33.4 vol.% CO and 61.9 vol.% H₂ is used as feed in a first Fischer-Tropsch synthesis step as performed in a tubular reactor and in the presence of a cobalt-based catalyst. The H₂/CO molar ratio (molar consumption ratio) is 2.08. The conversion of syngas into compounds having 5 and more carbon atoms was 80%. The effluent so obtained was passed into a first separation unit from which a gaseous effluent stream is removed and a liquid effluent is removed. The gaseous effluent comprises 13.4 vol.% CH₄, 2.2 vol.% C₂⁺, 1.4 vol.% H₂O, 16.4 vol.% CO₂, 33.2 vol.% CO and 16.5 vol.% H₂. The H₂/CO molar ratio of the gaseous effluent stream is 0.5. The liquid effluent stream comprises mostly paraffinic hydro carbon products. 90 vol.% of the gaseous effluent stream is recycled to the first Fischer-Tropsch synthesis step, whereas the remaining part of the gaseous effluent stream is subjected to a chemical looping reforming process to obtain a syngas comprising 0 vol.% CH₄, 0.4 vol.% H₂O, 12.5 vol.% CO₂, 36.8 vol.% CO and 39.4 vol.% H₂. This syngas stream is used as feed in a second Fischer-Tropsch synthesis step as performed in a tubular reactor and in the presence of a cobalt-based catalyst. The H₂/CO molar ratio (molar feed ratio) is 1.1. The conversion of syngas into compounds having 5 and more carbon atoms was 69%. The effluent so obtained was passed into a second separation unit from which a gaseous effluent stream is removed and a liquid effluent is removed. 90 vol.% of the gaseous effluent stream is recycled to the second Fischer-Tropsch synthesis step. The total liquid production was 9,453 tons per day.

### Comparative Example A

The above example was repeated, except that the gaseous effluent stream from the first Fischer-Tropsch synthesis step is directly passed to the second Fischer-Tropsch synthesis step. The conversion of syngas into compounds having 5 and more carbon atoms in the second stage synthesis step was 67%. The effluent so obtained was passed into a separation unit from which the gaseous effluent stream is removed, and partly recycled to the second step, and a liquid effluent is removed. The total liquid production was 9,218 tons per day.

It will be clear from the above that in accordance with the present invention a considerable increase in total liquid production can be obtained when compared with a conventional two-stage Fischer-Tropsch process.

## Claims

1. A multi-stage process for the production of hydrocarbons from syngas comprising hydrogen and carbon monoxide, which comprises the steps of:
a) providing a syngas feed to a first stage Fischer-Tropsch reactor which is provided with a hydrocarbon synthesis catalyst and allowing CO and hydrogen to convert into hydrocarbon products at an elevated temperature and pressure;
b) feeding at least part of the effluent from the first stage Fischer-Tropsch reactor to a first separation unit;
c) removing a gaseous effluent stream comprising hydrogen and CO and gaseous hydrocarbons from the first separation unit;
d) removing one or more other streams comprising hydrocarbon and/or water from the first separation unit;
e) subjecting at least part of the removed gaseous stream as obtained in step (c) to a syngas manufacturing process to prepare a syngas stream which comprises CO and hydrogen, which process is carried out at an elevated temperature and pressure;
f) feeding at least part of the syngas stream as obtained in step e) to a second stage Fischer-Tropsch reactor provided with a hydrocarbon synthesis catalyst and allowing CO and hydrogen to convert into hydrocarbon products at an elevated temperature and pressure;
g) feeding at least part of the effluent from the second stage Fischer- Tropsch reactor to a second separation unit;
h) removing a gaseous effluent stream comprising hydrogen and CO from the second separation unit; and
i) removing one or more other streams comprising hydrocarbon and/or water from the separation unit from the second separation unit.

2. Process according to claim 1, wherein at least part of the removed gaseous effluent stream as obtained in step (c) is recycled to the first stage Fischer-Tropsch reactor.

3. Process according to claim 1 or 2, wherein at least part of the removed gaseous effluent stream as obtained in step (h) is recycled to the second stage Fischer-Tropsch reactor.

4. Process according to any one of claims 1-3, wherein an additional hydrogen-containing gas stream is provided to the second stage Fischer-Tropsch reactor.

5. Process according to claim 4, wherein the hydrogen-containing gas stream which is provided to the second stage Fischer-Tropsch reactor is a syngas stream comprising hydrogen and carbon monoxide.

6. Process according to any one of the preceding claims, wherein the syngas as fed to the first stage Fischer-Tropsch reactor has a hydrogen/CO ratio in the range of 0.3 to 2.3:1, more in particular in the range of 0.5 to 2.1:1.

7. Process according to any one of claims 1-6, wherein the syngas as fed to the second stage Fischer-Tropsch reactor has a hydrogen/CO ratio in the range of 1.0 to 2.3:1, in particular in the range of 1.5 to 2.1:1.

8. Process according to any one of claims 1-7, wherein the synthesis gas is provided in step (a) by a partial oxidation process, an autothermal reforming process or a gas heated reforming process.

9. Process according to any one of claims 1-8, wherein the syngas manufacturing process in step (e) is a partial oxidation process, an autothermal reforming process, a steam reforming process, a gas heated reforming process or a chemical looping reforming process.

10. Process according to claim 9, wherein the syngas manufacturing process in step (e) is a gas heated reforming process or a chemical looping reforming process.

11. A method according to any one of claims 1-10, wherein the volume ratio of synthesis gas provided in step (a) to the first stage Fischer-Tropsch reactor and synthesis gas fed in step (f) to the second stage Fischer-Tropsch reactor is in the range of from 3.0 to 10.0.

12. Process according to any one of claims 1-11, wherein the ratio of the amount of carbon monoxide to the volume of catalyst is lower in the second stage compared to the first stage.

13. Process according to any one of claims 1-12, wherein the catalyst in the first stage Fischer-Tropsch reactor differs from the catalyst in the second stage Fischer-Tropsch reactor.

14. Process according to claim 13, wherein the second stage Fischer-Tropsch reactor has a catalyst with a shorter diffusion path length compared to the catalyst in the first stage Fischer-Tropsch reactor.

15. Process according to any one of claims 1-14, wherein the temperature in the first stage Fischer-Tropsch reactor is in the range from 125 to 400 °C and the pressure in the first stage Fischer-Tropsch reactor is in the range from 5 to 150 bar absolute.

16. Process according to any one of claims 1-15, wherein in the syngas manufacturing process in step (e) the temperature is in the range from 500 to 1500 °C and the pressure is in the range from 5 to 150 bar absolute.

17. Process according to any one of claims 1-16, wherein the temperature in the second stage Fischer-Tropsch reactor is in the range from 125 to 400 °C and the pressure in the second stage Fischer-Tropsch reactor is in the range from 5 to 150 bar absolute.
